# FASCICULE DE BREVET EUROPEEN

(11) **EP 2 914 148 B1**
(45) Date de publication et mention de la délivrance du brevet: **18.01.2017**
(21) Numéro de dépôt: 13795831.0
(22) Date de dépôt: 28.10.2013
(51) Int. Cl.: A47J 19/02, A47J 19/06

(54) **APPAREIL ÉLECTROMÉNAGER DE PRÉPARATION CULINAIRE COMPORTANT UNE VIS DE PRESSAGE ET AU MOINS UN FILTRE**
ELEKTRISCHE HAUSHALTSVORRICHTUNG FÜR SPEISENZUBEREITUNG, MIT EINER PRESSSCHRAUBE UND MINDESTENS EINEM FILTER
ELECTRIC HOUSEHOLD APPLIANCE FOR CULINARY PREPARATION, COMPRISING A PRESSING SCREW AND AT LEAST ONE FILTER

(30) Priorité: 30.10.2012 FR 1260382
(43) Date de publication de la demande: 09.09.2015
(73) Titulaire: SEB S.A., 69130 Ecully (FR)
(72) Inventeur: DELAVAUD, Fabien, F-64510 Baliros (FR); RAUDE, Christian, F-64160 Buros (FR); SUBERBIE, Nicolas, F-65360 Momeres (FR); GINESTET, David, F-65000 Tarbes (FR)
(74) Mandataire: Cémeli, Eric Philippe Laurent
(86) Numéro de dépôt international: PCT/FR2013/052569
(87) Numéro de publication internationale: WO 2014/068231

(56) Documents cités:
- EP-A2- 2 510 842
- WO-A1-2007/148872
- WO-A2-2011/025227
- FR-A1- 2 967 034
- FR-A1- 2 967 035
- FR-A5- 2 058 526
- KR-A-102012 009 640
- US-A1- 2011 083 565

## Description

La présente invention concerne le domaine technique des appareils électroménagers de préparation culinaire pour extraire des jus ou des coulis à partir de fruits et/ou de légumes.

La présente invention concerne plus particulièrement les appareils électroménagers de préparation culinaire comportant une vis de pressage pressant les aliments contre un filtre pour extraire des jus ou des coulis.

Le document WO 2007 148872 divulgue un appareil comportant une vis de pressage entraînée en rotation dans un filtre, dans lequel une brosse rotative balaye la face extérieure de parois filtrantes annulaires du filtre. Cette disposition permet d'améliorer le rendement d'extraction, mais présente l'inconvénient de compliquer la construction de l'appareil, de renchérir le coût de l'appareil, et de rendre le montage, le démontage et le nettoyage de l'enceinte de travail logeant le filtre et la vis de pressage plus compliqués.

Le document WO 2012 036454 divulgue un appareil du type précité comportant plusieurs filtres interchangeables dont les parois filtrantes annulaires présentent des perforations de taille différentes. Toutefois cet appareil comporte une brosse rotative balayant la face extérieure des parois filtrantes annulaires du filtre agencé autour de la vis de pressage.

Le document FR 2 967 035 divulgue un appareil dépourvu de brosse rotative, dans lequel la ou les parties filtrantes du filtre sont agencées principalement entre la vis de pressage et la sortie d'évacuation d'aliments filtrés. Une telle réalisation apparait toutefois insuffisante pour garantir une bonne évacuation des jus épais ou des coulis.

Un objet de la présente invention est de proposer un appareil électroménager de préparation culinaire pour le pressage d'aliments présentant un bon rendement d'extraction, avec une construction peu onéreuse et facile d'utilisation.

Un autre objet de la présente invention est de proposer un appareil électroménager de préparation culinaire pour le pressage d'aliments présentant un bon rendement d'extraction, notamment pour l'extraction de coulis ou de jus épais.

Ces objets sont atteints avec un appareil électroménager de préparation culinaire pour le pressage d'aliments, comportant une enceinte de travail logeant une vis de pressage entrainée en rotation dans un filtre comportant au moins une partie latérale filtrante, l'enceinte de travail présentant une sortie d'évacuation d'aliments filtrés agencée à l'extérieur du filtre, le filtre comportant une portion latérale dépourvue de partie filtrante s'étendant sur toute la hauteur du filtre, ladite portion latérale s'étendant au moins à l'opposé de la sortie d'évacuation d'aliments filtrés, du fait que toute la ou toutes les parties latérales filtrantes du filtre (30) débouchent au dessus de partie(s) inclinée(s) d'un fond de l'enceinte de travail déversant vers la sortie d'évacuation d'aliments filtrés. Ces dispositions permettent de réaliser un appareil dépourvu de brosse rotative balayant les parois filtrantes du filtre, qui présente un bon rendement d'extraction, notamment pour les jus pulpeux et les coulis, avec une construction simple. La configuration en pente du fond de l'enceinte de travail permet d'éviter l'accumulation de matière filtrée loin de la sortie d'évacuation d'aliments filtrés, la présence de la portion latérale dépourvue de partie filtrante permet de réduire les surfaces de collecte de matière filtrée. L'accumulation d'aliments filtrés à l'opposé de la sortie d'évacuation d'aliments filtrés peut ainsi être évitée, ce qui contribue à améliorer le rendement d'extraction de l'appareil et à simplifier son nettoyage, avec une construction simple à réaliser.

Avantageusement, la portion latérale du filtre dépourvue de partie filtrante s'étend entre 120° et 240° autour du filtre, et de préférence entre 150° et 210° autour du filtre. Une telle réalisation est particulièrement adaptée à l'extraction de coulis ou de jus épais, par exemple pulpeux, mais convient aussi pour les jus plus fluides. L'accumulation de matières peu fluides à l'opposé de la sortie d'évacuation d'aliments filtrés peut ainsi être évitée, ce qui contribue à améliorer le rendement d'extraction de l'appareil et à simplifier son nettoyage, avec une construction simple à réaliser.

Avantageusement encore, la portion latérale du filtre dépourvue de partie filtrante s'étend entre 40° et 240° autour du filtre, et de préférence entre 60° et 180° autour du filtre. Une telle réalisation est davantage adaptée à l'extraction de jus plus fluides.

Avantageusement encore, la ou les parties inclinées du fond présentent une pente d'au moins 5° en direction de la sortie d'évacuation d'aliments filtrés dans la ou les zones du fond s'étendant en regard de la ou les parties latérales filtrantes du filtre. Cette disposition contribue à faciliter l'écoulement des coulis ou des jus épais vers la sortie d'évacuation d'aliments filtrés, et convient également pour les jus plus fluides.

Selon un mode de réalisation avantageux adapté à la réalisation de jus plus fluides, l'appareil comporte un autre filtre interchangeable avec le filtre, l'autre filtre présentant au moins une autre partie latérale filtrante, la ou les autres parties latérales filtrantes débouchant au dessus du fond de l'enceinte de travail, ainsi qu'une autre portion latérale dépourvue de partie filtrante, la ou les autres parties latérales filtrantes s'étendant davantage autour de l'autre filtre que la ou les parties latérales filtrantes du filtre. Cette disposition permet d'obtenir un bon rendement d'extraction pour les jus fluides en permettant une surface de parties latérales filtrantes plus importante, sans que nécessairement la ou les autres parties latérales filtrantes débouchent au dessus de parties inclinées du fond de l'enceinte de travail déversant vers la sortie d'évacuation d'aliments filtrés.

Avantageusement alors, l'autre filtre est plus fin que le filtre. Ainsi l'autre filtre présente une taille de perforations plus faible que le filtre.

Avantageusement alors, l'autre portion latérale dépourvue de partie filtrante de l'autre filtre s'étend au moins à l'opposé de la sortie d'évacuation d'aliments filtrés. Cette disposition contribue à faciliter l'écoulement des coulis ou des jus épais vers la sortie d'évacuation d'aliments filtrés.

Selon une forme de réalisation avantageuse adaptée notamment à la réalisation de jus fluides, par exemple non pulpeux, la ou les autres parties latérales filtrantes présentent des perforations de taille comprise entre 0,25 et 0,5 mm, et de préférence entre 0,3 et 0,4 mm.

Selon un mode de réalisation avantageux, le filtre, respectivement l'autre filtre, comporte une sortie de décharge de résidus communiquant avec une zone intérieure du filtre, respectivement de l'autre filtre, disposée à l'extérieur de la vis de pressage, la sortie de décharge de résidus étant au moins partiellement obturée par un joint de rétention déformable sous la pression des aliments pressés par la vis de pressage à l'intérieur du filtre, respectivement à l'intérieur de l'autre filtre. Cette disposition permet d'évacuer les résidus de pressage hors du filtre, et de préférence ensuite hors de l'enceinte de travail. Cette disposition contribue à l'obtention d'un bon rendement d'extraction lorsque l'appareil est utilisé avec une quantité importante d'aliments.

Alors, selon une forme de réalisation avantageuse, le joint de rétention est porté par le filtre, respectivement par l'autre filtre. Une telle réalisation permet notamment d'envisager l'utilisation de joints de rétention de section et/ou de dureté différente(s) pour le filtre et pour l'autre filtre, et/ou des conduits d'évacuation de sections différentes. En alternative, le joint de rétention peut notamment être agencé dans l'enceinte de travail.

Avantageusement encore, le fond présente deux parties inclinées agencées de part et d'autre de la sortie d'évacuation d'aliments filtrés. Cette disposition permet d'obtenir davantage de surfaces de parties latérales filtrantes agencées à proximité de la sortie d'évacuation d'aliments filtrés.

Avantageusement encore, le fond entoure le filtre. Cette disposition permet de simplifier la réalisation de l'appareil.

Avantageusement encore, le fond est réalisé en acier inoxydable. Cette disposition permet d'obtenir une surface de collecte de matière pressée présentant une bonne résistance à l'abrasion lors du nettoyage, ainsi qu'une absence de coloration par les aliments.

Avantageusement encore, la sortie d'évacuation d'aliments filtrés présente un bec verseur antigoutte monté pivotant entre une position d'écoulement et une position de rétention. Cette disposition permet de retenir dans l'appareil les jus ou les coulis, par exemple pour changer de récipient de collecte en cours de fonctionnement.

Selon une forme de réalisation avantageuse adaptée notamment à la réalisation de coulis ou de jus pulpeux, la ou les parties latérales filtrantes présentent des perforations de taille comprise entre 0,6 et 1 mm, et de préférence comprise entre 0,7 et 0,9 mm.

Selon un mode de réalisation, l'enceinte de travail est montée sur un boîtier motorisé présentant une sortie d'entraînement pour entraîner en rotation la vis de pressage disposée dans l'enceinte de travail. Avantageusement, l'enceinte de travail est montée amovible sur le boîtier motorisé. En alternative, une partie de l'enceinte de travail pourrait notamment être solidaire du boîtier motorisé.

L'invention sera mieux comprise à l'étude d'un exemple de réalisation et de deux variantes, pris à titre nullement limitatif, illustrés dans les figures annexées, dans lesquelles :
- la figure 1 illustre un exemple d'appareil électroménager de préparation culinaire selon l'invention, représenté en élévation et en éclaté,
- la figure 2 est une vue en coupe verticale de l'appareil électroménager de préparation culinaire illustré sur la figure 1, comportant l'un des filtres,
- la figure 3 est une vue de dessous d'un filtre de l'appareil illustré sur la figure 1,
- la figure 4 est une vue de dessous d'un autre filtre de l'appareil illustré sur la figure 1,
- la figure 5 est une vue en perspective d'un récepteur de jus inférieur de l'appareil illustré sur les figures 1 et 4,
- la figure 6 est une vue de dessus du récepteur de jus inférieur illustré sur la figure 5,
- la figure 7 est une vue en coupe diamétrale du récepteur de jus inférieur illustré sur les figures 5 et 6,
- la figure 8 est une vue de face du récepteur de jus inférieur illustré sur les figures 5 à 7,
- la figure 9 est une vue latérale en coupe du récepteur de jus inférieur illustré sur les figures 5 à 8,
- la figure 10 est une vue partielle en coupe verticale selon une seconde orientation de l'appareil électroménager de préparation culinaire illustré sur la figure 1, comportant le filtre illustré sur la figure 3,
- la figure 11 est une vue partielle en coupe verticale selon une troisième orientation de l'appareil électroménager de préparation culinaire illustré sur la figure 1, comportant l'autre filtre illustré sur la figure 4,
- les figures 12 et 13 sont deux variantes de réalisation d'une enceinte de travail d'un appareil selon l'invention.

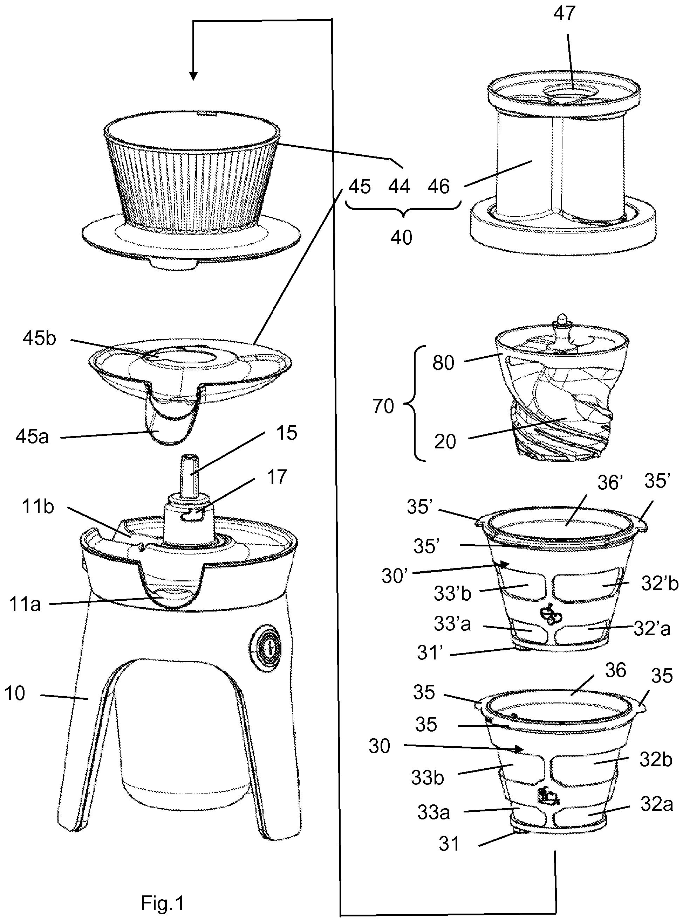

L'appareil électroménager de préparation culinaire pour le pressage d'aliments illustré sur la figure 1 comporte un boîtier motorisé 10, une enceinte de travail 40, un filtre 30, un autre filtre 30' interchangeable avec le filtre 30, une vis de pressage 20 pouvant être agencée dans le filtre 30 ou dans l'autre filtre 30'.

L'enceinte de travail 40 comporte une sortie d'évacuation d'aliments filtrés 45a et une sortie d'évacuation de résidus 45b. La sortie d'évacuation de résidus 45b communique avec l'espace intérieur du filtre 30 ou de l'autre filtre 30' entourant la vis de pressage 20. La sortie d'évacuation d'aliments filtrés 45a communique avec l'espace interne de l'enceinte de travail 40 à l'extérieur du filtre 30 ou de l'autre filtre 30'. Ainsi la sortie d'évacuation d'aliments filtrés 45a est agencée à l'extérieur du filtre 30, respectivement à l'extérieur de l'autre filtre 30'. Le filtre 30, respectivement l'autre filtre 30', comporte une sortie de décharge de résidus 31 ; 31' communiquant avec une zone intérieure du filtre 30, respectivement de l'autre filtre 30', disposée à l'extérieur de la vis de pressage 20 agencée dans l'enceinte de travail 40. La sortie de décharge de résidus 31 ; 31' est disposée à l'aplomb de la sortie d'évacuation de résidus 45b lorsque le filtre 30, respectivement l'autre filtre 30', est disposé dans l'enceinte de travail 40.

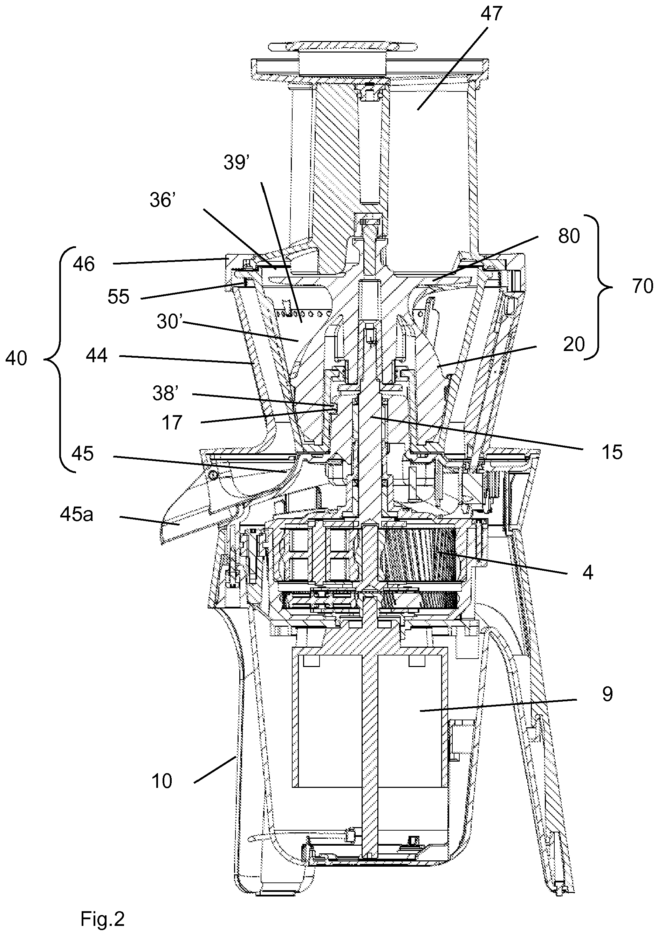

Dans l'exemple de réalisation illustré sur les figures, l'enceinte de travail 40 est montée amovible sur le boîtier motorisé 10. Le boîtier motorisé 10 présente une sortie d'entraînement 15 pour entraîner en rotation la vis de pressage 20 disposée dans l'enceinte de travail 40. Le boîtier motorisé 10 forme un socle sur lequel repose l'enceinte de travail 40. Le boîtier 10 loge un moteur 9 électrique, représenté schématiquement sur la figure 2. Le moteur 9 est relié à la sortie d'entrainement 15, si désiré par l'intermédiaire d'un dispositif de transmission 4. L'enceinte de travail 40 comporte un récepteur de jus inférieur 45, un déflecteur de jus 44 et un couvercle 46. La sortie d'évacuation d'aliments filtrés 45a est formée sur le récepteur de jus inférieur 45. La sortie d'évacuation de résidus 45b est formée dans le récepteur de jus inférieur 45. Le boîtier motorisé 10 comporte une échancrure 11a prévue pour recevoir la sortie d'évacuation d'aliments filtrés 45a. Le boîtier motorisé 10 présente une autre échancrure 11 b agencée en dessous de la sortie d'évacuation de résidus 45b, prévue pour recevoir les résidus de pressage issus de la sortie de décharge de résidus 31 ; 31' du filtre 30, respectivement de l'autre filtre 30', agencé dans l'enceinte de travail 40.

Le boitier motorisé 10 présente des empreintes 17 prévues pour recevoir des ergots primaires 38, 38' du filtre 30, respectivement l'autre filtre 30'. Le filtre 30, respectivement l'autre filtre 30', est ainsi directement monté et verrouillé dans les empreintes 17 du boîtier motorisé 10 avec un montage de type baïonnette. Le filtre 30, respectivement l'autre filtre 30', est ainsi bloqué en rotation et en translation sur le boîtier motorisé 10. Le récepteur de jus inférieur 45 agencé entre le boîtier motorisé 10 et le filtre 30, respectivement l'autre filtre 30', est bloqué en rotation par l'échancrure 11a et en translation par le filtre 30, respectivement par l'autre filtre 30', de sorte qu'il est correctement maintenu en place sur le boîtier motorisé 10. Le couvercle 46 est monté directement sur le filtre 30, respectivement sur l'autre filtre 30', par l'intermédiaire d'ergots secondaires 35, 35' du filtre 30, respectivement de l'autre filtre 30', qui coopèrent avec des nervures 55 du couvercle 46. Le couvercle 46 est ainsi verrouillé avec un montage de type baïonnette sur le filtre 30, respectivement sur l'autre filtre 30'. Le couvercle 46 comporte au moins une goulotte 47 communiquant avec l'intérieur de l'enceinte de travail 40.

La vis de pressage 20 est prolongée en son extrémité supérieure par un disque de prédécoupe 80. La vis de pressage 20 forme avec le disque de prédécoupe 80 une tête de pressage 70. Le filtre 30, respectivement l'autre filtre 30', présente une ouverture 36 ; 36' pour la mise en place de la tête de pressage 70. L'ouverture 36 ; 36' est agencée en regard du couvercle 46. Ainsi, le couvercle 46 est assemblé et verrouillé avec le filtre 30, respectivement avec l'autre filtre 30' pour former une enceinte de filtration contenant la tête de pressage 70.

Tel que visible sur la figure 2, le boîtier motorisé 10 forme un socle sur lequel repose l'enceinte de travail 40. Le boîtier 10 loge un moteur 9 électrique, représenté schématiquement. Le moteur 9 est relié à la sortie d'entrainement 15, si désiré par l'intermédiaire d'un dispositif de transmission 4.

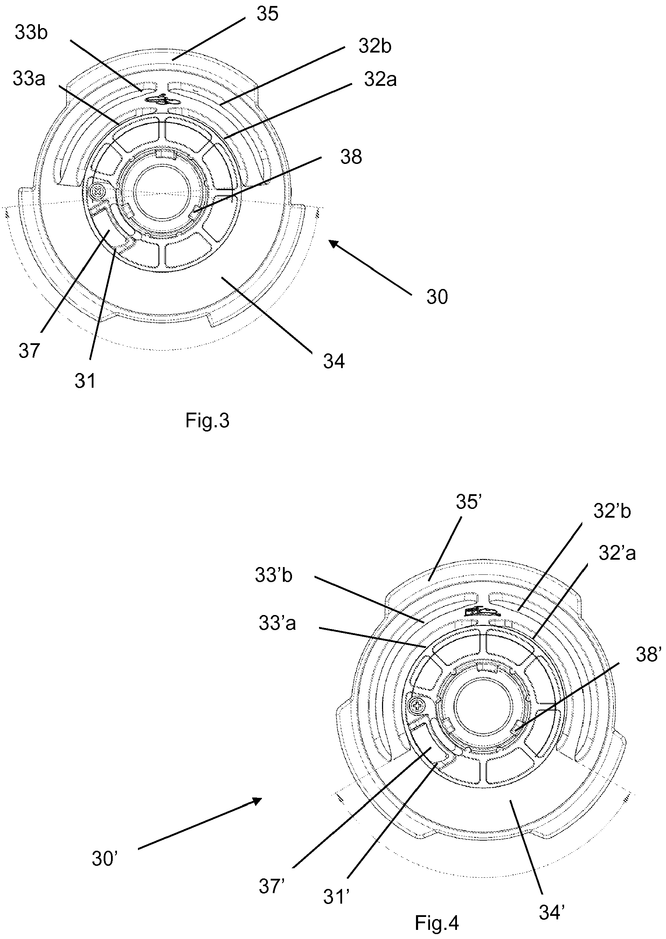

Le filtre 30 illustré sur la figure 3 est plus particulièrement prévu pour l'extraction de jus épais, tels que des jus pulpeux, ou de coulis. Le filtre 30 comporte au moins une partie latérale filtrante 32a, 32b, 33a, 33b. La ou les parties latérales filtrantes 32a, 32b, 33a, 33b sont avantageusement formées par une paroi perforée 39 agencée à l'intérieur du filtre 30. La ou les autres parties latérales filtrantes 32a, 32b, 33a, 33b présentent par exemple des perforations de l'ordre de 0,8 mm. A titre de variante, la ou les parties latérales filtrantes 32a, 32b, 33a, 33b pourraient notamment présenter des perforations de taille comprise entre 0,6 et 1 mm, et de préférence entre 0,7 et 0,9 mm. Des nervures internes sont agencées à l'intérieur du filtre 30, pour coopérer avec les filets de la vis de pressage 20 et pousser les aliments introduits dans l'enceinte de travail 40 vers le bas. Plus particulièrement, le filtre 30 comporte deux parties latérales filtrantes 32a, 33a inférieures et deux parties latérales filtrantes 32b, 33b supérieures. Le filtre 30 comporte une portion latérale 34 dépourvue de partie filtrante s'étendant sur toute la hauteur du filtre 30. Dans l'exemple de réalisation illustré sur les figures, la portion latérale 34 du filtre 30 dépourvue de partie filtrante s'étend sur 190°. Les parties latérales filtrantes 32a, 32b, 33a, 33b s'étendent ainsi sur 170°, tel que représenté sur la figure 3. A titre de variante, la portion latérale 34 du filtre 30 dépourvue de partie filtrante pourrait s'étendre entre 120° et 240° autour du filtre 30, et de préférence entre 150° et 210° autour du filtre 30.

L'autre filtre 30' est plus particulièrement prévu pour l'extraction de jus peu épais, tels que des jus non pulpeux. A cet effet l'autre filtre 30' est plus fin que le filtre 30. La ou les parties latérales filtrantes 32'a, 32'b, 33'a, 33'b sont avantageusement formées par une paroi perforée 39' agencée à l'intérieur du de l'autre filtre 30'. La ou les autres parties latérales filtrantes 32'a, 32'b, 33'a, 33'b présentent par exemple des perforations de l'ordre de 0,35 mm. A titre de variante, la ou les autres parties latérales filtrantes 32'a, 32'b, 33'a, 33'b pourraient notamment présenter des perforations de taille comprise entre 0,25 et 0,5 mm, et de préférence entre 0,3 et 0,4 mm.

L'autre filtre 30' diffère du filtre 30 en ce que la ou les autres parties latérales filtrantes 32'a, 32'b, 33'a, 33'b s'étendent davantage autour de l'autre filtre 30' que la ou les parties latérales filtrantes 32a, 32b, 33a, 33b autour du filtre 30. La ou les autres parties latérales filtrantes 32'a, 32'b, 33'a, 33'b de l'autre filtre 30' s'étendent sur plus de la moitié de la circonférence de l'autre filtre 30', par exemple sur 240°. La portion latérale 34' de l'autre filtre 30' dépourvue de partie filtrante s'étend ainsi sur 120°, tel que représenté sur la figure 4. A titre de variante, la portion latérale 34' de l'autre filtre 30' dépourvue de partie filtrante pourrait s'étendre entre 40° et 240° autour de l'autre filtre 30', et de préférence entre 60° et 180° autour de l'autre filtre 30'.

La sortie de décharge de résidus 31 ; 31' du filtre 30, respectivement de l'autre filtre 30' est au moins partiellement obturée par un joint de rétention 37 ; 37' déformable sous la pression des aliments pressés par la vis de pressage 20 à l'intérieur du filtre 30, respectivement à l'intérieur de l'autre filtre 30'. Le joint de rétention 37 ; 37' est porté par le filtre 30, respectivement par l'autre filtre 30'.

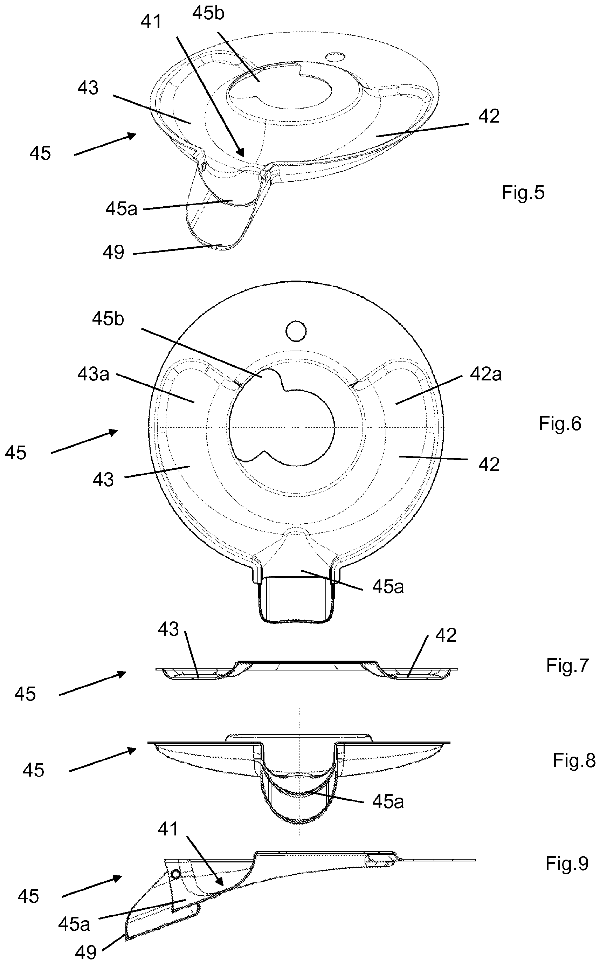

Les figures 5 à 9 illustrent le récepteur de jus inférieur 45 formant la partie inférieure de l'enceinte de travail 40. Le récepteur de jus inférieur 45 est prévu pour collecter et diriger les jus ou les coulis extraits par la vis de pressage 20 au travers du filtre 30 ou de l'autre filtre 30'. Le récepteur de jus inférieur 45 forme ainsi le fond 41 de l'enceinte de travail 40. Le fond 41 entoure le filtre 30 ou l'autre filtre 30'. Le fond 41 présente deux parties inclinées 42, 43 déversant vers la sortie d'évacuation d'aliments filtrés 45a. Les deux parties inclinées 42, 43 sont agencées de part et d'autre de la sortie d'évacuation d'aliments filtrés 45a. Plus particulièrement les parties inclinées 42, 43 du fond 41 présentent une pente d'au moins 5° en direction de la sortie d'évacuation d'aliments filtrés 45a dans la ou les zones du fond 41 s'étendant en regard des parties latérales filtrantes 32a, 32b, 33a, 33b du filtre 30. Les zones 42a, 43a du fond 41 prolongeant les parties inclinées 42, 43, agencées en regard des autres parties latérales filtrantes 32'a, 32'b, 33'a, 33'b de l'autre filtre 30', mais pas des parties latérales filtrantes 32a, 32b, 33a, 33b du filtre 30, ne sont pas nécessairement déversantes vers la sortie d'évacuation d'aliments filtrés 45a, mais peuvent par exemple être planes.

Le fond 41 est avantageusement réalisé en acier inoxydable. Tel que représenté sur les figures, la sortie d'évacuation d'aliments filtrés 45a présente un bec verseur antigoutte 49 monté pivotant entre une position d'écoulement et une position de rétention.

L'appareil selon l'invention s'utilise et fonctionne de la manière suivante.

L'utilisateur place le récepteur de jus inférieur 45 et le déflecteur de jus 44 sur le boîtier motorisé 10, verrouille le filtre 30 ou l'autre filtre 30' sur le boîtier motorisé 10, dispose la tête de pressage 70 dans le filtre 30 ou dans l'autre filtre 30' et verrouille le couvercle 46 sur le filtre 30 ou sur l'autre filtre 30'. L'utilisateur peut ensuite mettre en marche l'appareil et introduire les aliments par la goulotte 47.

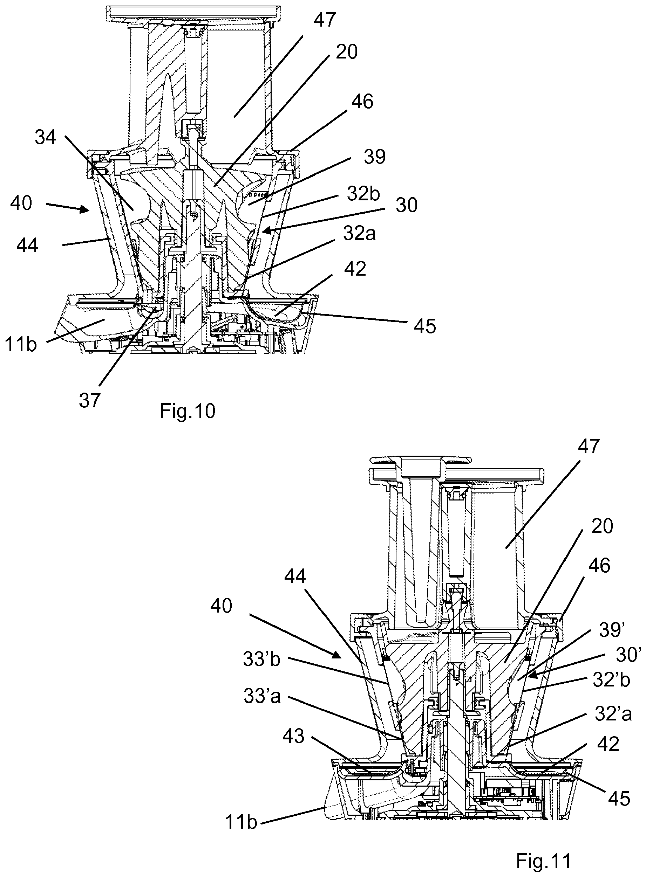

La figure 10 illustre l'appareil illustré avec le filtre 30. Lorsque le filtre 30 est en place dans l'enceinte de travail 40, la portion latérale 34 s'étend au moins à l'opposé de la sortie d'évacuation d'aliments filtrés 45a, et les parties latérales filtrantes 32a, 32b, 33a, 33b débouchent au dessus des parties inclinées 42, 43 du fond 41 de l'enceinte de travail 40. La collecte des coulis et des jus épais est facilitée.

Ainsi toutes les parties latérales filtrantes 32a, 32b, 33a, 33b du filtre 30 débouchent au dessus de parties inclinées 42, 43 du fond 41 de l'enceinte de travail 40 ; 75 ; 76 déversant vers la sortie d'évacuation d'aliments filtrés 45a.

La figure 11 illustre l'appareil illustré avec l'autre filtre 30'. Lorsque l'autre filtre 30' est en place dans l'enceinte de travail 40, une portion des autres parties latérales filtrantes 32'a, 32'b, 33'a, 33'b débouche au dessus des zones 42a, 43a du fond 41, toutefois la fluidité des jus extraits avec l'autre filtre 30' permet leur écoulement vers la sortie d'évacuation d'aliments filtrés 45a. Par ailleurs, la plus faible taille des perforations de l'autre filtre 30' est au moins en partie compensée par la surface plus importante des autres parties latérales filtrantes 32'a, 32'b, 33'a, 33'b.

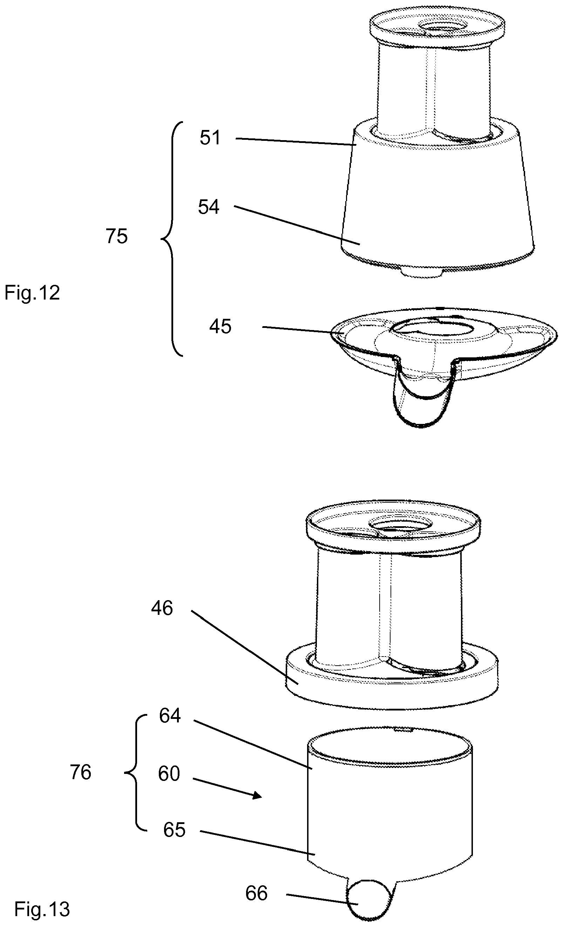

A titre de variante, l'enceinte de travail 40 ne comporte pas nécessairement un déflecteur de jus 44 indépendant. La figure 12 illustre un couvercle 51 intégrant un déflecteur de jus 54. Le couvercle 51 peut être utilisé avec le récepteur de jus inférieur 45 pour former une enceinte de travail 75 logeant le filtre 30 ou l'autre filtre 30'. Le filtre 30 ou l'autre filtre 30' est alors verrouillé avec le couvercle 51. Le déflecteur de jus 54 est posé sur le récepteur de jus inférieur 45.

A titre de variante, l'enceinte de travail 40 ne comporte pas nécessairement un couvercle 46 verrouillé sur le filtre 30 ou sur l'autre filtre 30'. La figure 13 illustre un récipient de travail 60 intégrant un déflecteur de jus 64 et un récepteur de jus inférieur 65 présentant au moins une sortie d'évacuation d'aliments filtrés 66. Le récipient de travail 60 peut être utilisé avec le couvercle 46 pour former une enceinte de travail 76 logeant le filtre 30 ou l'autre filtre 30'.

A titre de variante, la tête de pressage 70 peut être dépourvue de disque de prédécoupe 80, ou encore comporter un disque de prédécoupe indépendant de la vis de pressage 20.

A titre de variante, le fond 41 peut comporter une seule partie inclinée déversant vers la sortie d'évacuation d'aliments filtrés 45a, le filtre 30 et/ou l'autre filtre 30' pouvant alors comporter une ou plusieurs autres parties filtrantes débouchant au dessus de la partie inclinée du fond 41. Ainsi toute la ou toutes les parties latérales filtrantes du filtre 30 débouchent au dessus de la partie inclinée du fond 41 de l'enceinte de travail 40; 75; 76 déversant vers la sortie d'évacuation d'aliments filtrés 45a et/ou toute la ou toutes les parties latérales filtrantes de l'autre filtre 30' peuvent déboucher au dessus la partie inclinée du fond 41 de l'enceinte de travail 40 ; 75 ; 76 déversant vers la sortie d'évacuation d'aliments filtrés 45a.

A titre de variante, le filtre 30 pourrait présenter des perforations plus fines, adaptées notamment à l'extraction de jus non pulpeux. La portion latérale 34 dépourvue de partie filtrante peut s'étendre avantageusement entre 40° et 240° autour du filtre 30, et de préférence entre 60° et 180° autour du filtre 30.

A titre de variante, l'appareil ne comporte pas nécessairement un autre filtre.

La présente invention n'est nullement limitée aux exemples de réalisation décrits, mais englobe de nombreuses modifications dans le cadre des revendications.

## Revendications

1. Appareil électroménager de préparation culinaire pour le pressage d'aliments, comportant une enceinte de travail (40 ; 75 ; 76) logeant une vis de pressage (20) entrainée en rotation dans un filtre (30) comportant au moins une partie latérale filtrante (32a, 32b, 33a, 33b), l'enceinte de travail (40 ; 75 ; 76) présentant une sortie d'évacuation d'aliments filtrés (45a) agencée à l'extérieur du filtre (30), le filtre (30) comportant une portion latérale (34) dépourvue de partie filtrante s'étendant sur toute la hauteur du filtre (30), ladite portion latérale (34) s'étendant au moins à l'opposé de la sortie d'évacuation d'aliments filtrés (45a), **caractérisé en ce que** toute la ou toutes les parties latérales filtrantes (32a, 32b, 33a, 33b) du filtre (30) débouche(nt) au dessus de partie(s) inclinée(s) (42, 43) du fond (41) de l'enceinte de travail (40 ; 75 ; 76) déversant vers la sortie d'évacuation d'aliments filtrés (45a).

2. Appareil électroménager de préparation culinaire pour le pressage d'aliments selon la revendication 1, **caractérisé en ce que** la portion latérale (34) du filtre (30) dépourvue de partie filtrante s'étend entre 120° et 240° autour du filtre (30), et de préférence entre 150° et 210° autour du filtre (30).

3. Appareil électroménager de préparation culinaire pour le pressage d'aliments selon l'une des revendications 1 ou 2, **caractérisé en ce que** la portion latérale (34) du filtre (30) dépourvue de partie filtrante s'étend entre 40° et 240° autour du filtre (30), et de préférence entre 60° et 180° autour du filtre (30).

4. Appareil électroménager de préparation culinaire pour le pressage d'aliments selon l'une des revendications 1 à 3, **caractérisé en ce que** la ou les parties inclinées (42, 43) du fond (41) présentent une pente d'au moins 5° en direction de la sortie d'évacuation d'aliments filtrés (45a) dans la ou les zones du fond (41) s'étendant en regard de la ou les parties latérales filtrantes (32a, 32b, 33a, 33b) du filtre (30).

5. Appareil électroménager de préparation culinaire pour le pressage d'aliments selon l'une des revendications 1 à 4, **caractérisé en ce qu'**il comporte un autre filtre (30') interchangeable avec le filtre (30), l'autre filtre (30') présentant au moins une autre partie latérale filtrante (32'a, 32'b, 33'a, 33'b), la ou les autres parties latérales filtrantes (32'a, 32'b, 33'a, 33'b) débouchant au dessus du fond (41) de l'enceinte de travail (40), ainsi qu'une autre portion latérale (34') dépourvue de partie filtrante, la ou les autres parties latérales filtrantes (32'a, 32'b, 33'a, 33'b) s'étendant davantage autour de l'autre filtre (30') que la ou les parties latérales filtrantes (32a, 32b, 33a, 33b) du filtre (30).

6. Appareil électroménager de préparation culinaire pour le pressage d'aliments selon la revendication 5, **caractérisé en ce que** l'autre filtre (30') est plus fin que le filtre (30).

7. Appareil électroménager de préparation culinaire pour le pressage d'aliments selon l'une des revendications 5 ou 6, **caractérisé en ce que** l'autre portion latérale (34') dépourvue de partie filtrante de l'autre filtre (30') s'étend au moins à l'opposé de la sortie d'évacuation d'aliments filtrés (45a).

8. Appareil électroménager de préparation culinaire pour le pressage d'aliments selon l'une des revendications 5 à 7, **caractérisé en ce que** la ou les autres parties latérales filtrantes (32'a, 32'b, 33'a, 33'b) présentent des perforations de taille comprise entre 0,25 et 0,5 mm, et de préférence entre 0,3 et 0,4 mm.

9. Appareil électroménager de préparation culinaire pour le pressage d'aliments selon l'une des revendications 1 à 8, **caractérisé en ce que** le filtre (30), respectivement l'autre filtre (30'), comporte une sortie de décharge de résidus (31 ; 31') communiquant avec une zone intérieure du filtre (30), respectivement de l'autre filtre (30'), disposée à l'extérieur de la vis de pressage (20), la sortie de décharge de résidus (31 ; 31') étant au moins partiellement obturée par un un joint de rétention (37 ; 37') déformable sous la pression des aliments pressés par la vis de pressage (20) à l'intérieur du filtre (30), respectivement à l'intérieur de l'autre filtre (30').

10. Appareil électroménager de préparation culinaire pour le pressage d'aliments selon la revendication 9, **caractérisé en ce que** le joint de rétention (37 ; 37') est porté par le filtre (30), respectivement par l'autre filtre (30').

11. Appareil électroménager de préparation culinaire pour le pressage d'aliments selon l'une des revendications 1 à 10, **caractérisé en ce que** le fond (41) présente deux parties inclinées (42, 43) agencées de part et d'autre de la sortie d'évacuation d'aliments filtrés (45a).

12. Appareil électroménager de préparation culinaire pour le pressage d'aliments selon l'une des revendications 1 à 11, **caractérisé en ce que** le fond (41) entoure le filtre (30).

13. Appareil électroménager de préparation culinaire pour le pressage d'aliments selon l'une des revendications 1 à 12, **caractérisé en ce que** le fond (41) est réalisé en acier inoxydable.

14. Appareil électroménager de préparation culinaire pour le pressage d'aliments selon l'une des revendications 1 à 13, **caractérisé en ce que** la sortie d'évacuation d'aliments filtrés (45a) présente un bec verseur antigoutte (49) monté pivotant entre une position d'écoulement et une position de rétention.

15. Appareil électroménager de préparation culinaire pour le pressage d'aliments selon l'une des revendications 1 à 14, **caractérisé en ce que** la ou les parties latérales filtrantes (32a, 32b, 33a, 33b) présentent des perforations de taille comprise entre 0,6 et 1 mm, et de préférence entre 0,7 et 0,9 mm.

16. Appareil électroménager de préparation culinaire selon l'une des revendications 1 à 15, **caractérisé en ce que** l'enceinte de travail (40 ; 75 ; 76) est montée sur un boîtier motorisé (10) présentant une sortie d'entraînement (15) pour entraîner en rotation la vis de pressage (20) disposée dans l'enceinte de travail (40 ; 75 ; 76).

## Patentansprüche

1. Elektrohaushaltsgerät zur Zubereitung von Speisen für das Pressen von Lebensmitteln mit einem Arbeitsraum (40; 75; 76), in dem eine Pressschnecke (20) untergebracht ist, die in einem Filter (30) mit mindestens einem seitlichen Filterteil (32a, 32b, 33a, 33b) in Drehung versetzt wird, wobei der Arbeitsraum (40; 75; 76) eine Auslassöffnung für gefilterte Lebensmittel (45a) aufweist, die außen am Filter (30) angeordnet ist, wobei der Filter (30) über einen Seitenteil (34) ohne Filter verfügt, der sich über die gesamte Höhe des Filters (30) erstreckt, wobei sich der vorgenannte Seitenteil (34) zumindest gegenüber der Auslassöffnung für gefilterte Lebensmittel (45a) erstreckt, **dadurch gekennzeichnet, dass** ein seitlicher Filterteil oder sämtliche seitlichen Filterteile (32a, 32b, 33a, 33b) des Filters (30) über einem geneigten Teil oder geneigten Teilen (42, 43) des Bodens (41) des Arbeitsraums (40; 75; 76) mündet bzw. münden, der bzw. die zur Auslassöffnung für gefilterte Lebensmittel (45a) hin gekrümmt ist bzw. sind.

2. Elektrohaushaltsgerät zur Zubereitung von Speisen für das Pressen von Lebensmitteln nach Anspruch 1, **dadurch gekennzeichnet, dass** sich der Seitenteil (34) des Filters (30) ohne Filter zwischen 120° und 240° um den Filter (30) und vorzugsweise zwischen 150° und 210° um den Filter (30) herum erstreckt.

3. Elektrohaushaltsgerät zur Zubereitung von Speisen für das Pressen von Lebensmitteln nach einem der Ansprüche 1 oder 2, **dadurch gekennzeichnet, dass** sich der Seitenteil (34) des Filters (30) ohne Filter zwischen 40° und 240° um den Filter (30) und vorzugsweise zwischen 60° und 180° um den Filter (30) herum erstreckt.

4. Elektrohaushaltsgerät zur Zubereitung von Speisen für das Pressen von Lebensmitteln nach einem der Ansprüche 1 bis 3, **dadurch gekennzeichnet, dass** der geneigte Teil oder die geneigten Teile (42, 43) des Bodens (41) eine Neigung von mindestens 5° in Richtung der Auslassöffnung für gefilterte Lebensmittel (45a) in dem Bodenbereich oder den Bodenbereichen (41) aufweist bzw. aufweisen, der bzw. die sich gegenüber dem seitlichen Filterteil oder den seitlichen Filterteilen (32a, 32b, 33a, 33b) des Filters (30) erstreckt bzw. erstrecken.

5. Elektrohaushaltsgerät zur Zubereitung von Speisen für das Pressen von Lebensmitteln nach einem der Ansprüche 1 bis 4, **dadurch gekennzeichnet, dass** es einen weiteren Filter (30') umfasst, der mit dem anderen Filter (30) austauschbar ist, wobei der weitere Filter (30') mindestens einen seitlichen Filterteil (32'a, 32'b, 33'a, 33'b) aufweist und der seitliche Filterteil oder die seitlichen Filterteile (32'a, 32'b, 33'a, 33'b) über dem Boden (41) des Arbeitsraums (40) mündet bzw. münden, sowie über einen weiteren Seitenteil (34') ohne Filter verfügt, wobei sich der seitliche Filterteil oder die seitlichen Filterteile (32'a, 32'b, 33'a, 33'b) weiter um den anderen Filter (30') herum erstreckt bzw. erstrecken als der seitliche Filterteil oder die seitlichen Filterteile (32a, 32b, 33a, 33b) des Filters (30).

6. Elektrohaushaltsgerät zur Zubereitung von Speisen für das Pressen von Lebensmitteln nach Anspruch 5, **dadurch gekennzeichnet, dass** der weitere Filter (30') feiner als der Filter (30) ist.

7. Elektrohaushaltsgerät zur Zubereitung von Speisen für das Pressen von Lebensmitteln nach einem der Ansprüche 5 oder 6, **dadurch gekennzeichnet, dass** sich der andere filterlose Seitenteil (34') des weiteren Filters (30') mindestens gegenüber der Auslassöffnung für gefilterte Lebensmittel (45a) erstreckt.

8. Elektrohaushaltsgerät zur Zubereitung von Speisen für das Pressen von Lebensmitteln nach einem der Ansprüche 5 bis 7, **dadurch gekennzeichnet, dass** der seitliche Filterteil oder die seitlichen Filterteile (32'a, 32'b, 33'a, 33'b) Perforationen mit einer Größe zwischen 0,25 und 0,5 mm und vorzugsweise zwischen 0,3 und 0,4 mm aufweist bzw. aufweisen.

9. Elektrohaushaltsgerät zur Zubereitung von Speisen für das Pressen von Lebensmitteln nach einem der Ansprüche 1 bis 8, **dadurch gekennzeichnet, dass** der Filter (30) beziehungsweise der weitere Filter (30') einen Auslass für Rückstände (31; 31') umfasst, der mit einem Innenbereich des Filters (30) beziehungsweise des weiteren Filters (30') verbunden ist, welcher außerhalb der Pressschnecke (20) angeordnet ist, wobei der Auslass für Rückstände (31; 31') mindestens teilweise durch eine Dichtung (37; 37') verschlossen ist, die unter dem Druck der durch die Pressschnecke (20) im Inneren des Filters (30) beziehungsweise im Inneren des weiteren Filters (30') gepressten Lebensmittel verformbar ist.

10. Elektrohaushaltsgerät zur Zubereitung von Speisen für das Pressen von Lebensmitteln nach Anspruch 9, **dadurch gekennzeichnet, dass** die Dichtung (37, 37') von dem Filter (30) oder dem weiteren Filter (30') gehalten wird.

11. Elektrohaushaltsgerät zur Zubereitung von Speisen für das Pressen von Lebensmitteln nach einem der Ansprüche 1 bis 10, **dadurch gekennzeichnet, dass** der Boden (41) zwei geneigte Teile (42, 43) aufweist, die beiderseits der Auslassöffnung für gefilterte Lebensmittel (45a) angeordnet sind.

12. Elektrohaushaltsgerät zur Zubereitung von Speisen für das Pressen von Lebensmitteln nach einem der Ansprüche 1 bis 11, **dadurch gekennzeichnet, dass** der Boden (41) den Filter (30) umrandet.

13. Elektrohaushaltsgerät zur Zubereitung von Speisen für das Pressen von Lebensmitteln nach einem der Ansprüche 1 bis 12, **dadurch gekennzeichnet, dass** der Boden (41) aus Edelstahl gefertigt ist.

14. Elektrohaushaltsgerät zur Zubereitung von Speisen für das Pressen von Lebensmitteln nach einem der Ansprüche 1 bis 13, **dadurch gekennzeichnet, dass** die Auslassöffnung für gefilterte Lebensmittel (45a) eine Tropfstopptülle (49) aufweist, die schwenkbar zwischen einer Ablass- und einer Rückhalteposition montiert ist.

15. Elektrohaushaltsgerät zur Zubereitung von Speisen für das Pressen von Lebensmitteln nach einem der Ansprüche 1 bis 14, **dadurch gekennzeichnet, dass** der seitliche Filterteil oder die seitlichen Filterteile (32a, 32b, 33a, 33b) Perforationen mit einer Größe zwischen 0,6 und 1 mm und vorzugsweise zwischen 0,7 und 0,9 mm aufweist bzw. aufweisen.

16. Elektrohaushaltsgerät zur Zubereitung von Speisen für das Pressen von Lebensmitteln nach einem der Ansprüche 1 bis 15, **dadurch gekennzeichnet, dass** der Arbeitsraum (40; 75; 76) auf ein Motorgehäuse (10) montiert ist, das einen Antriebsausgang (15) aufweist, um die im Arbeitsraum (40; 75; 76) befindliche Pressschnecke (20) in Drehung zu versetzen.

## Claims

1. Electrical household appliance for food preparation for squeezing foodstuffs, comprising working chamber (40; 75; 76) housing a presser screw (20), rotatingly inserted into filter (30), comprising at least one filtering side part (32a, 32b, 33a, 33b), with work chamber (40; 75; 76), comprising filtered food draining outlet (45a) on the outside of filter (30), filter (30) comprising side section (34) without a filtering part that covers the entire height of filter (30), said side section (34) covering at least the part opposite filtered food draining outlet (45a), **characterised in that** all filtering side part(s) (32a, 32b, 33a, 33b) of filter (30) open over sloped part (42, 43) of base (41) of work chamber (40; 75; 76) which slopes towards filtered food draining outlet (45a).

2. Electrical household appliance for food preparation for squeezing foodstuffs as per Claim 1, **characterised in that** side section (34) of filter (30) without filtering part surrounds filter (30) from 120° to 240° and preferably surrounds filter (30) from 150° to 210°.

3. Electrical household appliance for food preparation for squeezing foodstuffs as per Claim 1 or Claim 2, **characterised in that** side section (34) of filter (30) without filtering part surrounds filter (30) from 40° to 240° and preferably surrounds filter (30) from 60° to 180°.

4. Electrical household appliance for food preparation for squeezing foodstuffs as per one of Claims 1 to 3, **characterised in that** the sloped part(s) (42, 43) of base (41) have a gradient of at least 5° sloping towards filtered food draining outlet (45a) in the area(s) of base (41) that are opposite filtering side part(s) (32a, 32b, 33a, 33b) of filter (30).

5. Electrical household appliance for food preparation for squeezing foodstuffs as per one of Claims 1 to 4, **characterised in that** it comprises alternate filter (30') which is interchangeable with filter (30), with alternate filter (30') having at least a second filtering side part (32'a, 32'b, 33'a, 33'b), with the alternate filtering side part(s) (32'a, 32'b, 33'a, 33'b) opening onto base (41) of work chamber (40), and alternate side part (34') without a filtering part, with alternate filtering side parts (32'a, 32'b, 33'a, 33'b) surrounding alternate filter (30') more than filtering side part(s) (32a, 32b, 33a, 33b) of filter (30).

6. Electrical household appliance for food preparation for squeezing foodstuffs as per Claim 5, **characterised in that** alternate filter (30') is thinner than filter (30).

7. Electrical household appliance for food preparation for squeezing foodstuffs as per one of Claims 5 or 6, **characterised in that** alternate side part (34') without filtering part for alternate filter (30') surrounds at least the area opposite filtered food draining outlet (45a).

8. Electrical household appliance for food preparation for squeezing foodstuffs as per one of Claims 5 to 7, **characterised in that** alternate side filtering part(s) (32'a, 32'b, 33'a, 33'b) comprise perforations that are 0.25 to 0.5 mm, and preferably between 0.3 and 0.4 mm, in size.

9. Electrical household appliance for food preparation for squeezing foodstuffs as per one of Claims 1 to 8, **characterised in that** filter (30) or alternate filter (30'), respectively, comprises a waste discharge outlet (31; 31') which connects to an area inside filter (30), or alternate filter (30'), not under presser screw (20), with waste discharge outlet (31; 31') being at least partially covered by retaining joint (37; 37') that can be deformed under the pressure of the foodstuffs pressed by presser screw (20) inside filter (30) or inside alternate filter (30'), respectively.

10. Electrical household appliance for food preparation for squeezing foodstuffs as per Claim 9, **characterised in that** retaining joint (37; 37') is supported by filter (30) or alternate filter (30'), respectively.

11. Electrical household appliance for food preparation for squeezing foodstuffs as per one of Claims 1 to 10, **characterised in that** base (41) comprises two sloping parts (42, 43) either side of filtered food draining outlet (45a).

12. Electrical household appliance for food preparation for squeezing foodstuffs as per one of Claims 1 to 11, **characterised in that** base (41) surrounds filter (30).

13. Electrical household appliance for food preparation for squeezing foodstuffs as per one of Claims 1 to 12, **characterised in that** base (41) is made of stainless steel.

14. Electrical household appliance for food preparation for squeezing foodstuffs as per one of Claims 1 to 13, **characterised in that** filtered food draining outlet (45a) comprises drip-free spout (49) mounted in such a way as to pivot between a pouring position and a retaining position.

15. Electrical household appliance for food preparation for squeezing foodstuffs as per one of Claims 1 to 14, **characterised in that** the filtering side part(s) (32a, 32b, 33a, 33b) comprise perforations that are 0.6 to 1 mm, and preferably between 0.7 and 0.9 mm, in size.

16. Electrical household appliance for food preparation for squeezing foodstuffs as per one of Claims 1 to 15, **characterised in that** work chamber (40; 75; 76) is mounted on motorised unit (10) with drive outlet (15) to rotate presser screw (20) in work chamber (40; 75; 76).
